# FASCICULE DE BREVET EUROPEEN

(11) **EP 3 362 320 B1**
(45) Date de publication et mention de la délivrance du brevet: **31.07.2019**
(21) Numéro de dépôt: 16794380.2
(22) Date de dépôt: 14.10.2016
(51) Int. Cl.: B60R 13/04, B60R 19/42

(54) **PANNEAU DE PORTE AVEC PIECE D'HABILLAGE**
TÜRPANEEL MIT EINEM VERKLEIDUNGSTEIL
DOOR PANEL WITH COVER PART

(30) Priorité: 16.10.2015 FR 1559904; 16.10.2015 FR 1559903
(43) Date de publication de la demande: 22.08.2018
(73) Titulaire: PSA AUTOMOBILES S.A., 78300 Poissy (FR)
(72) Inventeur: MICHEL, Xavier, 77340 Pontault Combault (FR); BOUDAN, Julien, 91210 Draveil (FR)
(86) Numéro de dépôt international: PCT/FR2016/052657
(87) Numéro de publication internationale: WO 2017/064435

(56) Documents cités:
- WO-A1-2013/041490
- FR-A1- 2 974 775
- FR-A1- 2 980 426

## Description

La présente invention concerne un panneau de protection destiné à être fixé sur une partie de la carrosserie d'un véhicule. L'invention concerne également un véhicule automobile équipé d'un ou plusieurs panneaux de protection.

Les portes latérales des véhicules automobiles sont souvent équipées de baguettes de protection pour protéger ces portes à l'égard de petits chocs urbains, tels que les chocs de portes latérales et de caddies. Du fait de leur faible largeur et épaisseur, ces baguettes ont une fonction de protection qui est très réduite. Afin d'améliorer la protection de la carrosserie d'un véhicule, il est connu de réaliser un panneau de protection comportant des cellules remplies d'air formant des parties en saillies permettant d'amortir les chocs contre la carrosserie. La demande de brevet FR2959189 décrit ainsi un panneau de protection en matière plastique comprenant une paroi en matière plastique rigide et une paroi en matière plastique souple. Ces deux parois sont par endroit espacées l'une de l'autre de manière à définir des cellules remplies d'air délimitées par une liaison étanche entre la paroi souple et la paroi rigide. Le panneau de protection comporte en outre des moyens pour fixer des équipements sur le panneau de protection, contre la paroi souple. Le document FR2974775 décrit aussi un panneau de protection, selon le préambule de la revendication 1, comportant une paroi en matière plastique rigide et une paroi en matière plastique souple.

Un tel panneau de protection permet une bonne protection de la carrosserie. Mais la présence de cellules remplies d'air et étanches, en saillie par rapport au reste du panneau de protection, rend difficile la fixation de pièces à proximité desdites cellules, comme par exemple des pièces de décoration. Si des pièces sont fixées sur le panneau de protection, comme par exemple des pièces de décoration, elles risquent d'être en saillie par rapport à la surface du panneau de protection et donc d'être abîmées rapidement en cas de petits chocs. De plus, il est intéressant de permettre le démontage aisé de ces pièces afin d'offrir la possibilité de personnaliser la décoration du véhicule en changeant ces pièces. Mais l'intégration d'un système de fixation permettant le démontage de ces pièces de décoration qui sont fixées à proximité des cellules, est compliqué à réaliser sur un tel panneau. Un autre inconvénient est que, si les cellules sont étanches, la fixation d'une pièce ne doit pas créer de fuite d'air importante au niveau des cellules pour conserver une bonne capacité d'amortissement.

La présente invention a pour but d'améliorer un tel panneau de protection. En particulier, un des buts de l'invention est de proposer un panneau de protection sur lequel peut être fixé une pièce, en particulier d'une pièce de décoration, qui soit protégée en cas de choc contre ledit panneau de protection. Un autre objectif est de permettre la modification de l'apparence du panneau de protection.

Ce but est atteint selon l'invention, grâce à un panneau de protection destiné à être fixé sur une partie de la carrosserie d'un véhicule automobile, ce panneau comportant une paroi rigide en matière plastique rigide et une paroi souple en matière plastique souple, ces deux parois étant en contact l'une avec l'autre dans une zone qui entourent une cellule dans laquelle la paroi souple est espacée de la paroi rigide et est bombée en saillie, la paroi rigide comportant sur l'une de ses faces des moyens de fixation pour fixer celle-ci à ladite partie de la carrosserie, remarquable en ce que la paroi souple comporte un logement en creux pour recevoir une pièce complémentaire.

Ainsi, le panneau de protection peut recevoir une pièce, par exemple une pièce de décoration ou de signalisation lumineuse, qui est protégée en cas de choc en étant placée dans le logement agencé dans la paroi souple. Cette pièce ne dépasse donc pas de la surface de la paroi souple car elle peut être mise en retrait par rapport à ladite surface de la paroi souple. De plus, la pièce insérée dans le logement est accessible s'il est nécessaire de la changer.

Selon l'invention, le logement en creux forme une gorge autour de la cellule. Une telle gorge permet avantageusement de placer une pièce complémentaire autour de la cellule, dans ladite gorge.

Selon l'invention, le panneau de protection comporte un premier trou de fixation et un deuxième trou de fixation traversant la paroi souple et la paroi rigide, lesdits trous de fixation étant agencés de manière à permettre le passage d'un moyen de fixation de la pièce complémentaire destinée à être fixée sur ledit panneau de protection. Lesdits trous de fixation sont disposés distants du bord de la cellule et situés dans le logement en creux, de préférence autour de la cellule.

Ainsi, les trous de fixation disposés autour des zones dans lesquelles la paroi souple est espacée de la paroi rigide permettent une fixation efficace d'une pièce au plus près de ladite zone. De plus, les trous de fixation permettent de fixer une pièce de manière démontable par des interfaces de fixations connus de l'homme du métier, comme par exemple des vis ou des systèmes de clips. Un autre avantage est que le positionnement des trous au fond du logement en creux permet de cacher lesdits trous par la pièce insérée dans ladite gorge. De plus, l'insertion de la pièce dans le logement en creux permet un centrage de ladite pièce qui facilite l'introduction des moyens de fixation dans les trous de fixation.

Dans un mode de réalisation de l'invention, la cellule est remplie de gaz et est délimitée par une liaison étanche entre la paroi souple et la paroi rigide, la liaison étanche passant entre les trous de fixation et la cellule.

Ainsi, même avec la présence de trous de fixation autour de la cellule, la cellule reste étanche et le gaz situé dans la cellule ne sort pas de ladite cellule en cas de choc, permettant une bonne capacité d'absorption de la cellule. De plus, la paroi souple au niveau d'une cellule retrouve facilement sa forme initiale suite à une déformation par écrasement due à un choc, grâce à la pression du gaz, qui peut être de l'air, dans la cellule supérieure à la pression de l'air à l'extérieur de la cellule lorsque la cellule est écrasée, et grâce à l'absence de fuite.

Dans un autre mode de réalisation de l'invention dans lequel le logement en creux forme une gorge autour de la cellule, la paroi souple et la paroi rigide sont l'une contre l'autre dans le fond de ladite gorge et les trous de fixation sont situés dans le fond de ladite gorge.

Le positionnement des trous au fond de la gorge permet avantageusement de cacher lesdits trous par la pièce insérée dans ladite gorge.

Dans un autre mode de réalisation de l'invention, le panneau de protection comporte un moyen de guidage de la paroi souple par rapport à la paroi rigide agencé de manière à mettre en correspondance, au moment du montage de la paroi souple sur la paroi rigide, des trous de la paroi souple avec des trous de la paroi rigide pour former les trous de fixation.

Ainsi, lors du montage de la paroi souple sur la paroi rigide, le moyen de guidage assure le positionnement de la paroi souple par rapport à la paroi rigide pour aligner les trous de la paroi souple et les trous de la paroi rigide, et obtenir ainsi la bonne géométrie des trous de fixation. Les trous de fixation ainsi réalisés sont constants, et la fixation de la pièce plus aisée et plus sure.

Selon un mode de réalisation préféré de l'invention, le moyen de guidage est agencé pour aligner les trous de la paroi souple avec les trous de la paroi rigide en déformant une partie de la paroi souple située autour des trous de la paroi souple.

La paroi souple étant déformable grâce à sa souplesse, le moyen de guidage ne déplace que la partie de la paroi souple située autour des trous. Ainsi avantageusement, la partie de la paroi souple autour des trous est correctement positionnée par rapport à la paroi rigide de manière à mettre en correspondance les trous de la paroi souple avec ceux de la paroi rigide. Les différentes parties de la paroi souple autour des trous peuvent être positionnées par rapport à la paroi rigide sans avoir à déplacer l'ensemble de la paroi souple. Un autre avantage est qu'il est ainsi possible de déplacer différents parties de la paroi souple autour de différents trous dans des directions différentes.

Dans un autre mode de réalisation de l'invention, le moyen de guidage est sur la périphérie de la zone dans laquelle la paroi souple et la paroi rigide sont espacées l'une de l'autre.

Dans un autre mode de réalisation de l'invention, le moyen de guidage est réalisé par au moins une nervure de la paroi rigide en saillie vers la paroi souple et coopérant avec une partie de la paroi souple formant la périphérie de la zone dans laquelle la paroi souple et la paroi rigide sont espacées l'une de l'autre.

Ainsi avantageusement, le moyen de guidage est réalisé de manière très simple et est invisible car situé dans le volume entre la paroi souple et la paroi rigide, en bord de cellule.

Dans un autre mode de réalisation de l'invention, le logement en creux comporte des parois latérales et un fond reliant lesdites parois latérales de manière à ce que la section transversale de la partie de la paroi souple formant ledit logement a une forme en U, et forme un relief en saillie sur la face de la paroi souple opposée à la face comportant ledit logement.

C'est à dire que la paroi souple comporte un relief en creux formant le logement sur l'une de ces faces, et ce relief en creux crée sur l'autre face de la paroi souple un relief en saillie. La paroi souple a ainsi une forme de U au niveau de la section transversale du logement. Ledit logement est ainsi avantageusement réalisé avec une paroi souple de faible épaisseur. La fabrication de la peau souple est simplifiée car elle peut être réalisée par exemple par la mise en forme d'une feuille en matière plastique thermo-formable d'épaisseur sensiblement constante.

Dans un autre mode de réalisation de l'invention, la paroi rigide comporte une dépression dans laquelle le relief en saillie de la paroi souple s'insère.

Ainsi avantageusement, lors du placage de la paroi souple sur la paroi rigide au cours de l'assemblage du panneau de protection, le logement est peu ou pas compressé et donc peu ou pas déformé car s'insérant dans la dépression.

Dans un autre mode de réalisation de l'invention, la partie de la paroi souple formant le fond du logement est fixé à la paroi rigide.

La fixation est réalisée par exemple par soudage laser ou par collage. Ainsi, la surface de fixation de la paroi souple sur la paroi rigide n'est pas ou peu diminuée par la présence du logement. De plus, lorsqu'une pièce est installée dans le logement, les risques que ladite pièce sorte du logement sont diminués grâce à une meilleure stabilité de la forme dudit logement, en particulier en cas de choc contre le panneau de protection.

Dans un autre mode de réalisation de l'invention, le logement en creux comporte un moyen de fixation destiné à fixer une pièce insérée dans ledit logement en creux.

Ainsi, le moyen de fixation peut être rendu invisible lorsqu'une pièce est introduite dans le logement, ladite pièce recouvrant ledit moyen de fixation.

Dans un autre mode de réalisation de l'invention, le moyen de fixation est réalisée par une diminution de l'espacement entre les deux parois latérales du logement sur une partie d'au moins d'une des parois latérales de manière à fixer une pièce par emboitement dans ledit logement.

Ainsi, le moyen de fixation est réalisé de manière simple par la forme du logement, en utilisant la souplesse de la matière de la paroi souple. La fixation d'une pièce de forme complémentaire à la forme du logement est alors obtenue par simple emboitement lors de l'insertion de la pièce dans ledit logement. Le rétrécissement peut être réalisé par exemple par une excroissance au niveau de l'extrémité des parois latérales située à l'opposé du fond du logement, ou par des excroissances sur les surfaces des parois latérales à la manière de crochets de fixation.

Le panneau de protection peut donc comporter une pièce complémentaire dans le logement en creux.

L'invention porte aussi sur un véhicule comportant un panneau de protection tel que décrit précédemment.

L'invention sera mieux comprise à la lecture de la description qui va suivre, donnée uniquement à titre d'exemple et faite en se référant aux dessins annexés, sur lesquels :
- La fig. 1 est une vue en perspective d'un panneau de protection suivant l'invention.
- La fig. 2 est une vue suivant la fig. 1 du panneau de protection avec une pièce de décoration.
- La fig. 3 est une vue en perspective de la coupe A-A du panneau de protection suivant une première variante.
- La fig. 4 est une vue de la section A-A du panneau de protection suivant la première variante.
- La fig. 5 est une vue la section B-B du panneau de protection suivant la première variante.
- La fig. 6 est une vue en perspective de la zone C de la paroi rigide, identifiée en fig. 2, sans la paroi souple.
- La fig. 7 est une similaire à la fig. 1 d'une partie du panneau de protection avec une pièce de décoration prête à être montée, suivant une deuxième variante de réalisation.
- La fig. 8 est une vue de la section C-C du panneau de protection de la fig. 7.
- La fig. 9 est une vue suivant la section A-A du panneau de protection suivant la deuxième variante de réalisation.
- La fig. 10 est une vue de la section B-B du logement en creux dans la paroi souple suivant la deuxième variante de réalisation

Les dessins sont des représentations schématiques pour faciliter la compréhension de l'invention. Les composants ne sont pas forcément représentés à l'échelle. Les mêmes références correspondent aux mêmes composants d'une figure à l'autre.

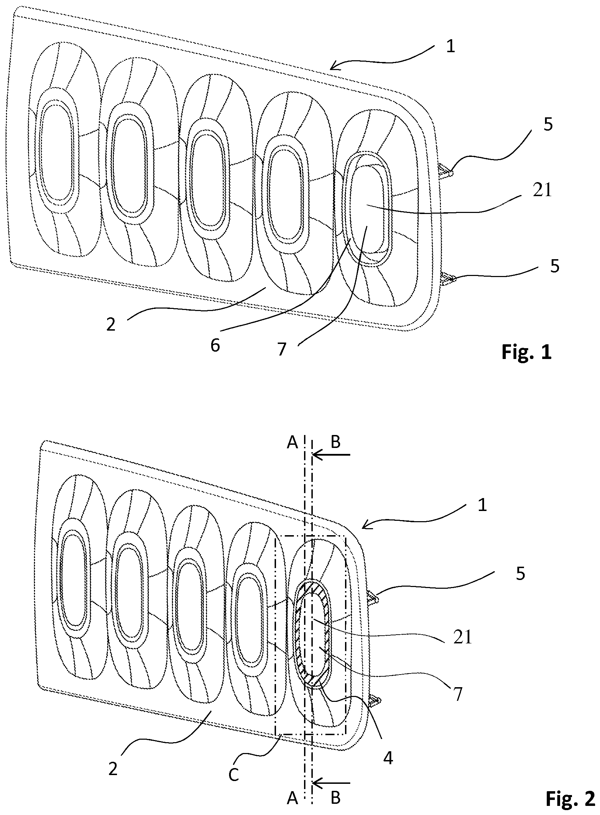

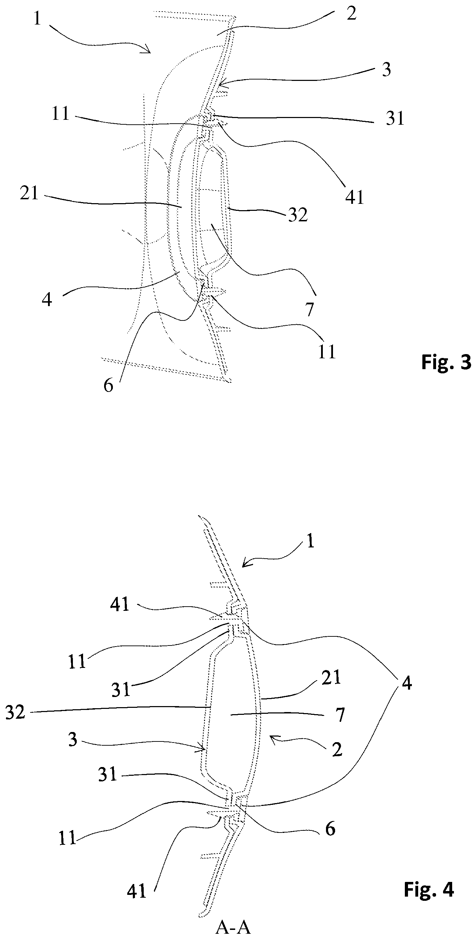

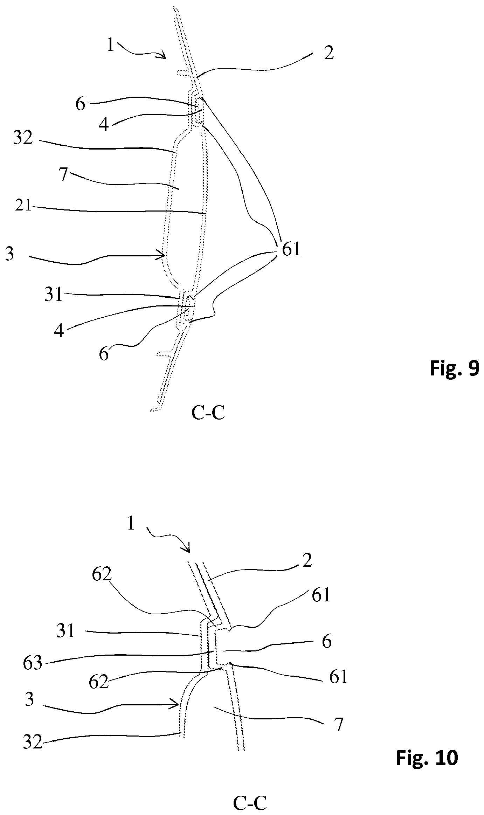

Les fig. 1 et 2 montrent un panneau de protection 1 suivant l'invention destiné à être fixé sur une partie de la carrosserie d'un véhicule. Le panneau de protection 1 comprend une paroi souple 2 fixée sur une paroi rigide 3 (illustrée dans les fig. 3 à 6 et 8 à 10). La paroi souple 2 et la paroi rigide 3 sont en contact l'une avec l'autre dans des zones qui entourent des zones dans lesquelles la paroi souple 2 est espacée de la paroi rigide 3 et est bombée en saillie, de manière à former des cellules 7. La paroi souple 2 est donc bombée en saillie en direction opposée de la paroi rigide au niveau des cellules 7. La paroi souple 2 est par exemple en polyuréthane thermoplastique (TPU), en polychlorure de vinyle (PVC) souple, en silicone ou encore en copolymère SEBS (styrène-éthylène-butylène-styrène). La paroi rigide 3 est par exemple en acrylonitrile butadiène styrène (ABS). La liaison entre la paroi souple 2 et la paroi rigide 3 peut être étanche autour des cellules 7 de manière à rendre étanche lesdites cellules 7. La paroi souple 2 et la paroi rigide 3 sont fixées l'une à l'autre par exemple par collage ou par soudure laser.

La paroi rigide 3 comporte sur l'une de ses faces des moyens de fixation 5 pour se fixer à la partie de carrosserie. Les moyens de fixation 5 du panneau de protection 1 sur la partie de carrosserie sont par exemple des systèmes de clips. D'autres moyens de fixation connus de l'homme du métier peuvent être utilisés. La paroi souple 2 comporte un logement en creux 6 à la surface de la paroi souple 2 opposée à la paroi rigide 3. Ce logement en creux 6 est destiné à recevoir une pièce complémentaire 4 rapportée illustrée dans les fig. 2, 3, 4, 6, 7, 8 et 9. Dans les modes de réalisation illustrés dans les figures, le logement en creux 6 est une gorge formant la périphérie de la cellule 7, c'est-à-dire que le logement en creux 6 forme un renfoncement à la manière d'une rainure de largeur sensiblement constante autour de la cellule 7. La pièce 4 forme un anneau s'insérant dans la gorge 6 et entourant l'une des cellules 7.

La paroi souple 2 forme les parties en saillie 21 dans les zones dans lesquelles la paroi souple 2 est espacée de la paroi rigide 3, c'est-à-dire en vis-à-vis des cellules 7, en étant bombée en direction opposée à la paroi rigide 3.

Comme illustré en fig. 2, la pièce 4, qui peut être par exemple une pièce de décoration, une pièce avec des fonctions d'éclairage ou de signalisation, est de forme complémentaire à la gorge 6 et s'insère dans ladite gorge 6, de manière à s'insérer entièrement dans ladite gorge 6. Ainsi, la pièce 4 n'est pas en saillie par rapport à la surface de la paroi souple 2, et est donc protégée par ladite paroi souple 2 en cas de choc, en particulier par la partie en saillie 21 de ladite paroi souple 2 au niveau de la cellule 7.

Cette pièce 4, indépendante du panneau de protection 1, peut être différente en fonction des véhicules de manière à personnaliser le véhicule. La pièce 4 est fixée de manière démontable afin de permettre son remplacement. Elle peut être réalisée en par exemple en matière plastique, en métal (par exemple en aluminium), ou matériau naturel, ou encore en plusieurs matériaux différents. En variante, la pièce 4 peut être fixée de manière définitive à la paroi souple 2 par exemple par collage.

La paroi rigide 3 du panneau de protection des figures comportent des zones en relief en forme de tronc de cône arrondi. Les cellules 7 sont situées au sommet de ces zones en relief. La paroi souple 2 est au contact de la paroi rigide 3 jusqu'au sommet de la zone en relief, puis s'en écarte de manière à former les cellules 7.

Les fig. 3 à 6 montrent un premier exemple de réalisation du panneau de protection. Comme l'illustre la fig. 3, la paroi souple 2 et la paroi rigide 3 sont en contact l'une avec l'autre dans des zones qui entourent les parties en saillies 21, et donc autour des cellules 7.

Le panneau de protection 1 comporte au moins deux trous de fixation 11 traversant la paroi souple 2 et la paroi rigide 3. Ces trous de fixation 11 sont positionnés autour de la cellule 7, dans les zones où la paroi souple 2 et la paroi rigide 3 sont l'une contre l'autre. La pièce 4 comporte des pattes de fixation 41 avec à chaque extrémité un bec d'encliquetage. Les pattes de fixation 41 passent au travers du panneau de protection 1 par les trous de fixation 11, jusqu'à ce que les becs d'encliquetage se positionnent de l'autre côté du panneau de protection 1 de manière à se bloquer contre la face de la paroi rigide 3, sur le bord des trous de fixation 11. La pièce 4 est ainsi maintenue contre le panneau de protection 1. Son montage est facile à réaliser, et elle peut en outre être démontée facilement pour être changée en désengageant les becs d'encliquetage.

La paroi souple 2 et la paroi rigide 3 sont fixées l'une à l'autre par exemple par collage ou par soudure laser. Les trous de fixation 11 sont disposés dans les zones dans lesquelles les parois 2 et 3 sont fixées entre elles. Lorsqu'une liaison étanche est réalisée entre la paroi souple 2 et la paroi rigide 3 de manière à former la cellule 7 étanche, la liaison étanche passe entre les trous de fixation 11 et la cellule 7 de manière à assurer l'étanchéité de la cellule 7.

Comme le montre la fig. 4, la paroi rigide 3 comporte une dépression 31 en vis-à-vis de la gorge 6, et la partie de la paroi souple 2 formant la gorge 6 est en contact avec la partie de la paroi rigide 3 formant la dépression 31. La paroi souple 2 et la paroi rigide 3 sont fixées l'une à l'autre au niveau du fond de la gorge 6, par exemple par collage ou soudage, dans la dépression 31.

En variante, la dépression 31 de la paroi rigide 3 peut être réalisée par une forme de gorge complémentaire à la forme de la gorge 6 créée par la paroi souple 2 de manière à ce que la partie de ladite paroi souple 2 formant la gorge 6 puisse s'insérer dans ladite dépression 31.

Dans le mode de réalisation présenté dans les figures 3 à 6, la paroi rigide 3 comporte un creux 32 entouré par la dépression 31, permettant d'augmenter le volume de la cellule 7, et donc le volume de gaz contenu dans la cellule 7. La gorge 6 est à la périphérie de ce creux 32. Les trous de fixation 11 sont positionnés dans le fond de la gorge 6. Ils sont ainsi recouverts par la pièce 4, rendant lesdits trous de fixation 11 non visibles lorsque la pièce 4 est insérée dans la gorge 6. Les trous de fixation 11 traversant la paroi souple 2 et la paroi rigide 3, ils sont formés par des trous dans la paroi souple et des trous 34 dans la paroi rigide.

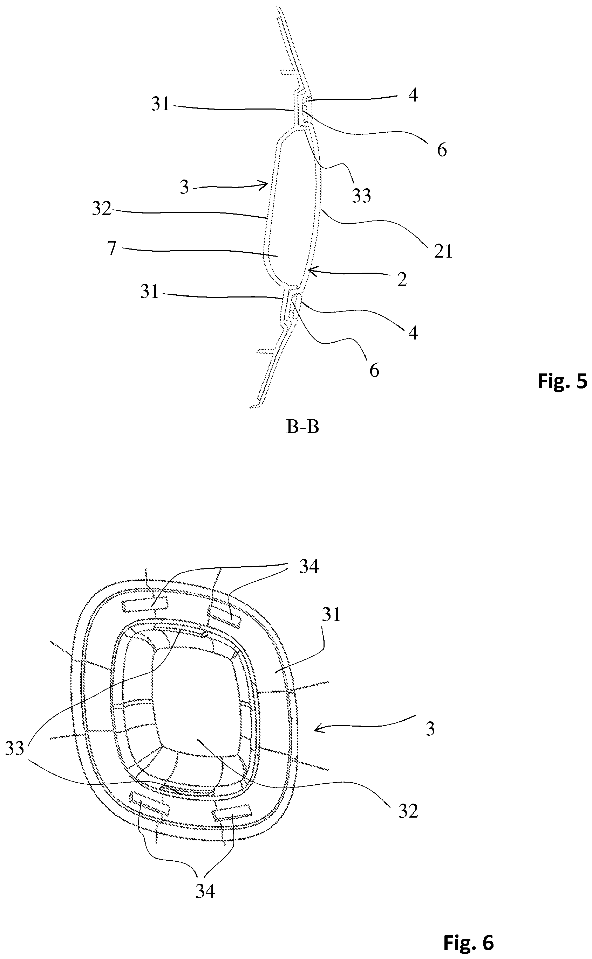

Afin de s'assurer un bon positionnement de la paroi souple 2 par rapport à la paroi rigide 3, en particulier autour des trous de fixation 11, des moyens de guidage sont prévus de manière à ce que les trous dans de la parois souple 2 soient correctement alignés avec les trous 34 de la paroi rigide 3. Comme illustré dans la fig. 5, ces moyens de guidage sont réalisés par une nervure 33 sur la face de la paroi rigide 3 recevant la paroi souple 2. Cette nervure 33 est située au bord de la zone où la paroi rigide 3 et la paroi souple 2 sont distantes l'une de l'autre, c'est-à-dire en bord de cellule 7. La nervure 33 coopère avec la partie de la paroi souple 2 formant la gorge 6. En effet, la forme de la gorge 6 est créée par une forme en créneau de la paroi souple 2. Le bord dudit créneau orienté vers l'intérieur de la zone dans laquelle la paroi souple 2 et la paroi rigide 3 sont distantes l'une de l'autre, s'appuie contre le bord de la nervure 33. Ainsi, lors du placage de la paroi souple 2 contre la paroi rigide 3, si la paroi souple 2 n'est pas correctement positionnée, la nervure 33 pousse sur le bord du créneau. La paroi souple 2 se déforme afin de déplacer la partie de ladite paroi souple 2 comportant les trous pour que ces trous s'alignent avec les trous 34 dans la paroi rigide 3 (illustrés dans la fig. 6) de manière à former les trous de fixation 11. Le bord de la dépression 31 peut créer aussi un autre moyen de guidage. Par exemple, le bord de la dépression 31 formant la limite avec le reste de la paroi rigide 3 crée une marche contre laquelle le bord du créneau formé par la partie de la paroi souple 2 créant la gorge 6 va s'appuyer au moment du placage de la paroi souple 2 sur la paroi rigide 3, par un effet similaire à la nervure 33. La partie de la paroi souple 2 formant la gorge 6 et située au voisinage des trous de fixation 11 est ainsi positionnée par la marche créée par la dépression 31. En variante, le moyen de guidage peut être obtenu par l'association de la nervure 33 et du bord de la dépression 31 agissant sur une partie de la paroi souple 2. Chaque trou de fixation 11 est de préférence de forme allongée, et de direction longitudinale suivant une direction sensiblement tangente au chemin parcouru par la gorge 6 au voisinage dudit trou de fixation 11.

La fig. 6 illustre la paroi rigide 3 seule dans la zone du panneau de protection 1 comportant la dépression 31, le creux 32 et la cellule 7. La paroi rigide 3 comporte dans cet exemple de réalisation quatre trous 34 qui forme une partie des trous de fixation 11. La périphérie de la zone dans laquelle la paroi souple 2 et la paroi rigide 3 sont espacées l'une de l'autre a une forme de carré à bords arrondis. La gorge 6 et la dépression 31 ont une forme similaire, à la périphérie de la zone dans laquelle la paroi souple 2 et la paroi rigide 3 sont espacées l'une de l'autre. Les trous 34 sont disposés par paire sur deux bords opposés du carré, dans la dépression 31. La paroi rigide 3 comporte deux nervures 33 situées chacune sur un des bords de la cellule 7, entre la dépression 31 et la cellule 7, à proximité de chaque paire de trous 34, au moins en vis-à-vis de l'espace entre les deux trous 34 d'une même paire. La nervure 33 positionne la partie de la paroi souple 2 autour de chaque paire de trous 34 située du même côté de la cellule 7, permettant d'aligner les trous de la paroi souple 2 situés en vis-à-vis des trous 34 de la paroi rigide 3. La nervure 33 permet un ajustement de la position de la paroi souple 2 sensiblement perpendiculairement par rapport au bord de la forme en carré à bord arrondi sur laquelle est située ladite nervure 33. Le guidage par la nervure 33 permet d'assurer que la dimension des trous de fixation 11 formés par les trous 34 et les trous dans la paroi souple 2 est suffisante pour permettre l'insertion des pattes de fixation 41 de la pièce de décoration 4. En effet, un décalage de la partie de la paroi souple 2 comportant les trous, par rapport à la partie de la paroi rigide 3 comportant les trous 34, diminuerait la taille des trous de fixation 11. De plus, ce positionnement par le moyen de guidage permet d'assurer une distance minimale entre le bord des trous dans la paroi souple 2 et le bord de la zone dans laquelle la paroi souple 2 et la paroi rigide 3 sont espacées l'une de l'autre. Ainsi, lors du montage, une surface de contact minimale entre la paroi souple 2 et la paroi rigide 3 dans la zone entre les trous de fixation 11 et la cellule 7, afin de permettre de créer une liaison étanche dans cette zone, par exemple par soudage ou par collage.

En cas de soudure par laser et de présence d'une cellule 7 étanche, la configuration des trous de fixation 11 et du moyen de guidage sera choisie de manière à ce que la distance entre le bord des trous dans la paroi souple 2 et le bord de la cellule 7 étanche soit de préférence supérieure ou égale à 3 mm de manière à assurer l'étanchéité de la soudure laser.

Chaque trou de fixation 11 a par exemple une forme allongée suivant un axe longitudinal, les axes longitudinaux de chaque trou de fixation 11 formant un angle inférieur à vingt degrés, ou inférieur à dix degrés, ou encore inférieur à cinq degrés entre eux. Le moyen de guidage est dans ce cas choisi par exemple de manière à déplacer la partie de la paroi souple 2 comportant les trous, suivant une direction formant un angle supérieur à quarante-cinq degrés, ou encore supérieur à soixante degrés, avec les axes longitudinaux des trous de fixation 11.

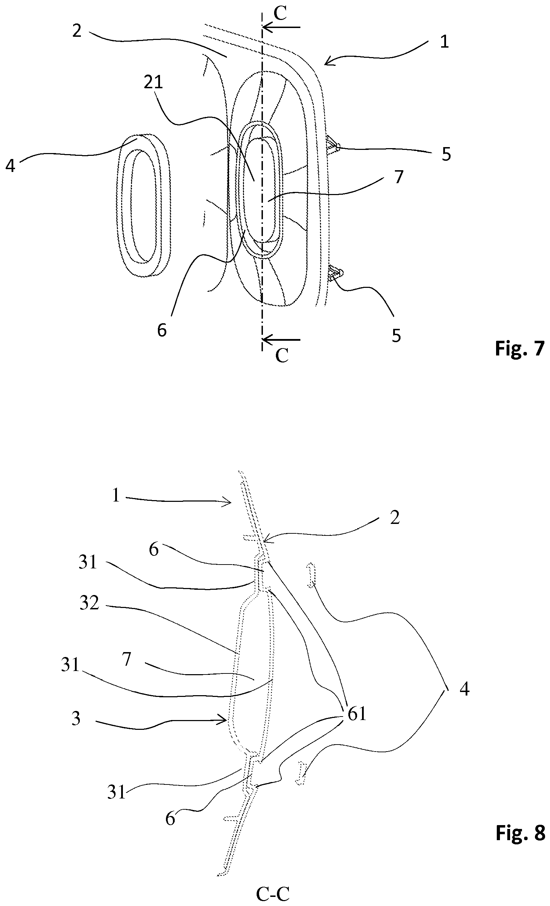

Les figures 7 à 10 décrivent un deuxième exemple de réalisation du panneau de protection 1.

La fig. 7 montre la pièce 4 en vis-à-vis de la paroi souple 2 et de la gorge 6, avant que ladite pièce 4 ne soit insérée dans ladite gorge 6.

Comme illustrer en fig. 8, 9 et 10, la section de la paroi souple 2 forme un U pour créer la gorge 6. La gorge 6 comporte deux parois latérales 62 et un fond 63 qui relie lesdites parois latérales 62. La gorge 6 forme donc un creux dans ladite paroi souple 2 sur l'une des faces de ladite paroi souple 2, et un relief en saillie correspondant au creux, sur l'autre face de la paroi souple 2, située de l'autre côté. La gorge 6 comporte des moyens de fixation de la pièce 4. Dans le mode de réalisation des fig. 8 à 10, ces moyens de fixation sont réalisés par des bourrelets 61 réduisant la largeur de la gorge 6, la largeur étant l'espacement entre les parois latérales 62 de ladite gorge 6. Ces bourrelets 61 sont positionnés à l'entrée de la gorge 6, à l'opposé du fond 63, c'est-à-dire à l'extrémité des parois latérales 62 opposée au fond 63 de la gorge 6. La pièce 4 est conformée de manière à ce que sa largeur soit supérieure à l'espacement entre les bourrelets 61 des deux côtés latéraux 62 opposés. La pièce 4 est rentrée en force dans la gorge 6. Une fois insérée, la pièce 4 est retenue par les bourrelets 61. Afin d'obtenir un meilleur maintien, la pièce 4 peut être dimensionnée de manière à rentrer dans la gorge au-delà des bourrelets 61 afin que lesdits bourrelets 61 bloquent la pièce 4 à l'intérieur de la gorge 6, et évitant ainsi à la pièce 4 de sortir de ladite gorge 6.

Dans une autre variante non représentée, la pièce 4 comporte une face extérieure qui est orientée à l'opposé du fond de la gorge 6 lorsque ladite pièce 4 est insérée dans la gorge 6, et dont les bords de ladite face extérieure forment des chanfreins, par exemple des chanfreins en forme de U, qui s'appuient sur les bourrelets 61. De préférence, la dimension des chanfreins et de la pièce 4 sont choisies de sorte que, lorsque la pièce 4 est introduite complétement dans la gorge 6, la surface des chanfreins s'appuie contre les bourrelets 61 et bloquent la pièce 4 dans la gorge 6, et la face extérieure de la pièce 4 est sensiblement dans le prolongement de la surface de la paroi souple 2 opposée à la paroi rigide 3, au voisinage de la gorge 6. Ainsi, l'esthétique du panneau de protection 1 est améliorée, et la pièce 4 est protégée par les parties en saillie 21 de la paroi souple 2 formées par les cellules 7.

Dans une autre variante non représentée, les bourrelets 61 se situent sur les parois latérales 62, entre le fond 63 et l'extrémité des parois latérales 62 opposée au fond 63. La pièce 4 comporte alors des surfaces latérales faisant face aux parois latérales 62 et des creux complémentaires dans lesdites surfaces latérales de forme complémentaire aux bourrelets 61, de manière à ce que lesdits bourrelets 61 rentrent dans lesdits creux complémentaires, pour bloquer la pièce 4. Dans une autre variante non représentée, les bourrelets peuvent se situer sur lesdites surfaces latérales de la pièce 4 et les creux complémentaires sur les parois latérales 62 de la gorge 6.

Pour que la paroi souple 2 se plaque correctement contre la paroi rigide 3, en particulier au niveau de la gorge 6, la paroi rigide 3 comporte une dépression 31 dans laquelle la partie de la paroi souple 2 formant la gorge 6 s'insère. Le fond 63 de la gorge 6 est en contact avec la dépression 31 de la paroi rigide 3. La paroi souple 2 est fixée à la paroi rigide 3 par collage ou par soudage au niveau du fond 63 de la gorge 6.

Dans le mode de réalisation des fig. 8 à 10, la dépression 31 forme le tour de la cellule 7, à l'extérieur de ladite cellule 7. Une des parois latérale 62 forme le bord de la cellule 7. La pièce 4 est ainsi située au plus près de la cellule 7. Afin d'augmenter le volume de la cellule 7, la paroi rigide 3 comporte un creux 32 entouré par la dépression 31. La gorge 6 forme ainsi le contour de la cellule 7.

Dans le mode de réalisation présenté dans les figures de 1 à 10, le logement en creux 6 forme une gorge 6 linéaire dessinant un périmètre fermé autour de la cellule 7. D'autres formes de logement 6 peuvent être envisagées, comme par exemple un logement en forme de disque, de carré ou autre polygone. Le logement en creux 6 peut aussi n'entourer que partiellement une des cellules 7, ou s'étendre entre plusieurs cellules 7. Un des bords du logement en creux 6 peut suivre le contour d'une cellule 7 et son autre bord être de forme très différente du bord de la cellule 7. Le logement en creux 6 peut être éloigné du contour de la cellule 7, c'est-à-dire qu'une distance de plusieurs millimètre, par exemple supérieure à 5 millimètres, ou plusieurs centimètres sépare la cellule 7 du bord du logement en creux 6 situé le plus proche de la cellule 7.

L'homme du métier saura appliquer l'enseignement décrit ci-dessus pour réaliser des panneaux de protection conforme à l'invention avec des formes de logement en creux 6 adaptés à recevoir une pièce complémentaire 4 différentes de celles décrites dans les figures 1 à 10.

## Revendications

1. Panneau de protection (1) destiné à être fixé sur une partie de la carrosserie d'un véhicule automobile, ce panneau comportant une paroi rigide (3) en matière plastique rigide et une paroi souple (2) en matière plastique souple, ces deux parois (2, 3) étant en contact l'une avec l'autre dans une zone qui entourent une cellule (7) dans laquelle la paroi souple (2) est espacée de la paroi rigide (3) et est bombée en saillie, la paroi rigide (3) comportant sur l'une de ses faces des moyens de fixation (5) pour fixer celle-ci à ladite partie de la carrosserie, la paroi souple (2) comportant un logement en creux (6) agencé pour recevoir une pièce (4) complémentaire, ledit logement en creux (6) formant une gorge autour de la cellule (7), **caractérisé en ce que** le panneau de protection (1) comporte un premier trou de fixation (11) et un deuxième trou de fixation (11) traversant la paroi souple (2) et la paroi rigide (3), lesdits trous de fixation (11) étant agencés de manière à permettre le passage d'un moyen de fixation (41) de la pièce complémentaire (4) destinée à être fixée sur ledit panneau de protection (1), lesdits trous de fixation (11) étant disposés distants du bord de la cellule (7) et situés dans le logement en creux (6).

2. Panneau de protection (1) suivant la revendication 1 **caractérisée en ce que** la cellule (7) est remplie de gaz et est délimitée par une liaison étanche entre la paroi souple (2) et la paroi rigide (3), la liaison étanche passant entre les trous de fixation (11) et la cellule (7).

3. Panneau de protection (1) suivant l'une des revendications 1 ou 2 **caractérisée en ce que** la paroi souple (2) et la paroi rigide (3) sont l'une contre l'autre dans le fond de ladite gorge (6) et les trous de fixation (11) sont situés dans le fond de ladite gorge (6).

4. Panneau de protection (1) suivant la revendication 3 **caractérisé en ce qu'**il comporte un moyen de guidage de la paroi souple (2) par rapport à la paroi rigide (3) agencé de manière à mettre en correspondance, au moment du montage de la paroi souple (2) sur la paroi rigide (3), des trous de la paroi souple (2) avec des trous (34) de la paroi rigide (3) pour former les trous de fixation (11).

5. Panneau de protection (1) suivant la revendication 4 **caractérisée en ce que** le moyen de guidage est agencé pour aligner les trous de la paroi souple (2) avec les trous (34) de la paroi rigide (3) en déformant une partie de la paroi souple (2) située autour des trous de la paroi souple (2).

6. Panneau de protection (1) suivant l'une des revendications 4 ou 5 **caractérisé en ce que** le moyen de guidage est sur la périphérie de la zone dans laquelle la paroi souple (2) et la paroi rigide (3) sont espacées l'une de l'autre.

7. Panneau de protection (1) suivant la revendication 6 **caractérisé en ce que** le moyen de guidage est réalisé par au moins une nervure (33) de la paroi rigide (3) en saillie vers la paroi souple (2) et coopérant avec une partie de la paroi souple (2) formant la périphérie de la zone dans laquelle la paroi souple (2) et la paroi rigide (3) sont espacées l'une de l'autre.

8. Panneau de protection (1) suivant l'une des revendications précédentes **caractérisé en ce que** le logement en creux (6) comporte des parois latérales (62) et un fond (63) reliant lesdites parois latérales (62) de manière à ce que la section transversale de la partie de la paroi souple (2) formant ledit logement (6) a une forme en U, et forme un relief en saillie sur la face de la paroi souple (2) opposée à la face comportant ledit logement (6).

9. Panneau (1) suivant la revendication 8 **caractérisé en ce que** la paroi rigide (3) comporte une dépression (31) dans laquelle le relief en saillie de la paroi souple (2) s'insère.

10. Panneau (1) suivant l'une des revendications 8 ou 9 **caractérisé en ce que** la partie de la paroi souple (2) formant le fond (63) du logement (6) est fixé à la paroi rigide (3).

11. Panneau (1) suivant l'une des revendications 8 à 10 **caractérisé en ce que** le logement (6) comporte un moyen de fixation (61) destiné à fixer une pièce (4) insérée dans ledit logement (6).

12. Panneau (1) suivant la revendication 11 **caractérisé en ce que** le moyen de fixation (61) est réalisée par une diminution de l'espacement entre les deux parois latérales (62) du logement (6) sur une partie d'au moins d'une des parois latérales (62) de manière à fixer une pièce (4) par emboitement dans ledit logement (6).

13. Véhicule avec un panneau de protection suivant l'une des revendications précédentes.

## Patentansprüche

1. Schutzplatte (1), die ausgelegt ist, um auf einem Teil der Karosserie eines Kraftfahrzeugs fixiert zu sein, wobei diese Platte eine starre Wand (3) aus starrem Kunststoffmaterial und eine elastische Wand (2) aus elastischem Kunststoffmaterial umfasst, wobei diese zwei Wände (2, 3) in einem Bereich miteinander in Kontakt sind, der eine Zelle (7) umgibt, in dem die elastische Wand (2) von der starren Wand (3) beabstandet und vorspringend gewölbt ist, wobei die starre Wand (3) auf einer ihrer Seiten Befestigungsmittel (5) umfasst, um diese an den Teil der Karosserie zu fixieren, wobei die elastische Wand (2) eine hohler Sitz (6) umfasst, der angeordnet ist, um ein komplementäres Stück (4) aufzunehmen, wobei der hohle Sitz (6) eine Auskehlung um die Zelle (7) bildet, **dadurch gekennzeichnet, dass** die Schutzplatte (1) ein erstes Befestigungsloch (11) und ein zweites Befestigungsloch (11) umfasst, die die elastische Wand (2) und die starre Wand (3) queren, wobei die Befestigungslöcher (11) derart angeordnet sind, dass sie den Durchgang eines Befestigungsmittels (41) des komplementären Stücks (4) ermöglichen, das ausgelegt ist, um auf der Schutzplatte (1) fixiert zu sein, wobei die Befestigungslöcher (11) beabstandet vom Rand der Zelle (7) angeordnet sind und sich in dem hohlen Sitz (6) befinden.

2. Schutzplatte (1) nach Anspruch 1, **dadurch gekennzeichnet, dass** die Zelle (7) mit Gas gefüllt ist und durch eine dichte Verbindung zwischen der elastischen Wand (2) und der starren Wand (3) begrenzt ist, wobei die dichte Verbindung zwischen den Befestigungslöchern (11) und der Zelle (7) verläuft.

3. Schutzplatte (1) nach einem der Ansprüche 1 oder 2, **dadurch gekennzeichnet, dass** die elastische Wand (2) und die starre Wand (3) gegeneinander am Boden der Auskehlung (6) und die Befestigungslöcher (11) am Boden der Auskehlung (6) angeordnet sind.

4. Schutzplatte (1) nach Anspruch 3, **dadurch gekennzeichnet, dass** sie ein Führungsmittel der elastischen Wand (2) mit Bezug auf die starre Wand (3) umfasst, das derart angeordnet ist, dass es im Augenblick der Montage der elastischen Wand (2) auf der starren Wand (3) Löcher der elastischen Wand (2) mit Löchern (34) der starren Wand (3) in Übereinstimmung bringt, um die Befestigungslöcher (11) zu bilden.

5. Schutzplatte (1) nach Anspruch 4, **dadurch gekennzeichnet, dass** das Führungsmittel angeordnet ist, um die Löcher der elastischen Wand (2) mit den Löchern (34) der starren Wand (3) auszufluchten, indem ein Teil der elastischen Wand (2) verformt wird, der sich um die Löcher der elastischen Wand (2) befindet.

6. Schutzplatte (1) nach einem der Ansprüche 4 oder 5, **dadurch gekennzeichnet, dass** das Führungsmittel auf dem Umfang des Bereichs ist, in dem die elastische Wand (2) und die starre Wand (3) voneinander beabstandet sind.

7. Schutzplatte (1) nach Anspruch 6, **dadurch gekennzeichnet, dass** das Führungsmittel durch mindestens eine Rippe (33) der starren Wand (3), die gegen die elastische Wand (2) vorspringt, durchgeführt ist und mit einem Teil der elastischen Wand (2) zusammenarbeitet, die den Umfang des Bereichs bildet, in dem die elastische Wand (2) und die starre Wand (3) voneinander beabstandet sind.

8. Schutzplatte (1) nach einem der vorhergehenden Ansprüche, **dadurch gekennzeichnet, dass** der hohle Sitz (6) seitliche Wände (62) und einen Boden (63) umfasst, der die seitlichen Wände (62) verbindet, so dass der Querabschnitt des Teils der elastischen Wand (2), der den Sitz (6) bildet, eine U-Form aufweist und ein Relief bildet, das auf der Seite der elastischen Wand (2) gegenüber der Seite, die den Sitz (6) umfasst, vorspringt.

9. Platte (1) nach Anspruch 8, **dadurch gekennzeichnet, dass** die starre Wand (3) eine Vertiefung (31) umfasst, in die das vorspringende Relief der elastischen Wand (2) eingefügt ist.

10. Platte (1) nach einem der Ansprüche 8 oder 9, **dadurch gekennzeichnet, dass** der Teil der elastischen Wand (2), der den Boden (63) des Sitzes (6) bildet, an die starre Wand (3) fixiert ist.

11. Platte (1) nach einem der Ansprüche 8 bis 10, **dadurch gekennzeichnet, dass** der Sitz (6) ein Befestigungsmittel (61) umfasst, das ausgelegt ist, um ein Stück (4) zu fixieren, das in den Sitz (6) eingefügt ist.

12. Platte (1) nach Anspruch 11, **dadurch gekennzeichnet, dass** das Befestigungsmittel (61) durch eine Verkleinerung der Beabstandung zwischen den zwei seitlichen Wänden (62) des Sitzes (6) auf einem Teil mindestens einer der seitlichen Wände (62) durchgeführt ist, um ein Stück (4) durch Ineinandergreifen in den Sitz (6) zu fixieren.

13. Fahrzeug mit einer Schutzplatte nach einem der vorhergehenden Ansprüche.

## Claims

1. Protective panel (1) designed to be fixed onto a part of the bodywork of a motor vehicle, said panel comprising a rigid wall (3) made from a rigid plastic material and a flexible wall (2) made from a flexible material, said two walls (2, 3) being in contact with one another in an area that surrounds a cell (7) in which the flexible wall (2) is spaced apart from the rigid wall (3) and is rounded in a protruding manner, the rigid wall (3) comprising on one of its surfaces attachments (5) for attaching said rigid wall to said portion of the bodywork, the flexible wall (2) comprising a hollow housing (6) arranged to receive a complementary part (4), said hollow housing (6) forming a groove around the cell (7), **characterised in that** the protective panel (1) comprises a first fixing hole (11) and a second fixing hole (11) traversing the flexible wall (2) and the rigid wall (3), said fixing holes (11) being arranged so as to permit the passage of an attachment means (41) of the complementary part (4) designed to be fixed onto said protective panel (1), said attachment holes (11) being arranged at a distance from the edge of the cell (7) and located in the hollow housing (6).

2. Protective panel (1) according to claim 1, **characterised in that** the cell (7) is filled with gas and is delimited by a sealed connection between the flexible wall (2) and the rigid wall (3), the sealed connection passing between the attachment holes (11) and the cell (7).

3. Protective panel (1) according to any of claims 1 or 2, **characterised in that** the flexible wall (2) and the rigid wall (3) are arranged against one another at the base of said housing (6) and the attachment holes (11) are located at the base of said housing (6).

4. Protective panel (1) according to claim 3, **characterised in that** it comprises a means for guiding the flexible wall (2) relative to the rigid wall (3) arranged so as to line up, at the time of assembly of the flexible wall (2) on the rigid wall (3), the holes of the flexible wall (2) with the holes (34) of the rigid wall (3) to form attachment holes (11).

5. Protective panel (1) according to claim 4, **characterised in that** the guiding device is arranged to align the holes of the flexible wall (2) with the holes (34) of the rigid wall (3) by deforming a part of the flexible wall (2) located around the holes of the flexible wall (2).

6. Protective panel (1) according to any of claims 4 or 5, **characterised in that** the guiding device is on the periphery of the area in which the flexible wall (2) and the rigid wall (3) are spaced apart from one another.

7. Protective panel (1) according to claim 6, **characterised in that** the guiding device is formed by at least one rib (33) of the rigid wall (3) projecting towards the flexible wall (2) and cooperating with a part of the flexible wall (2) forming the periphery of the area in which the flexible wall (2) and the rigid wall (3) are spaced apart from one another.

8. Protective panel (1) according to any of the preceding claims, **characterised in that** the hollow housing (6) comprises lateral walls (62) and a base (63) connecting said lateral walls (62), such that the transverse section of the part of the flexible wall (2) forming said housing (6) has the form of a U, and forms a relief projecting on the face of the flexible wall (2) opposite the face comprising said housing (6).

9. Panel (1) according to claim 8, **characterised in that** the rigid wall (3) comprises a depression (31) into which the projecting relief of the flexible wall (2) is inserted.

10. Panel (1) according to any of claims 8 or 9, **characterised in that** the part of the flexible wall (2) forming the base (63) of the housing (6) is fixed to the rigid wall (3).

11. Panel (1) according to any of claims 8 to 10, **characterised in that** the housing (6) comprises an attachment (61) designed to fix a part (4) inserted into said housing (6).

12. Panel (1) according to claim 11, **characterised in that** the attachment (61) is performed by reducing the space between the two lateral walls (62) of the housing (6) in at least one part of the lateral walls (62) so as to fix a part (4) by interlocking into said housing (6).

13. Vehicle with a protective panel according to any of the preceding claims.
